# EUROPÄISCHE PATENTSCHRIFT

(11) **EP 2 499 897 B1**
(45) Veröffentlichungstag und Bekanntmachung des Hinweises auf die Patenterteilung: **05.03.2014**
(21) Anmeldenummer: 12001585.4
(22) Anmeldetag: 08.03.2012
(51) Int. Cl.: A01D 78/10

(54) **Heuwerbungsmaschine**
Hay baler
Faneuse

(30) Priorität: 18.03.2011 DE 102011014419
(43) Veröffentlichungstag der Anmeldung: 19.09.2012
(73) Patentinhaber: Alois Pöttinger Maschinenfabrik Ges.m.b.H., 4710 Grieskirchen (AT)
(72) Erfinder: Höftberger, Franz, 4673 Gaspoltshofen (AT)
(74) Vertreter: Thoma, Michael

(56) Entgegenhaltungen:
- EP-A1- 0 131 530
- DE-U1-202004 011 969
- DE-U1-202006 019 211

## Beschreibung

Die vorliegende Erfindung betrifft eine Heuwerbungsmaschine, vorzugsweise in Form eines Zetters oder Schwaders, mit einem an einen Schlepper anbaubaren Fahrrahmen, der über ein Fahrwerk am Boden abgestützt ist, sowie einer Mehrzahl von Heuwerbungsaggregaten, die an einem Tragrahmen gelagert sind, der relativ zum Fahrrahmen zusammen mit den Heuwerbungsaggregaten von einer Hub-/Schwenkvorrichtung in eine Vorgewende- und/oder Transportstellung aushebbar ist.

Bei größeren Heuwerbungsmaschinen mit größeren Arbeitsbreiten, die mehrere nebeneinander angeordnete bzw. in verschiedenen Spuren laufende Rechkreisel umfassen, ist es bekannt, die Heuwerbungsaggregate aushebbar an einem durch ein Fahrwerk am Boden abgestützten Fahrrahmen anzuordnen, so dass die Heuwerbungsaggregate am Vorgewende ausgehoben oder zum Zwecke des Transports noch weiter ausgehoben und ggf. zusammengeklappt werden können. Hierzu ist der Tragrahmen, der die Heuwerbungsaggregate trägt, üblicherweise um eine liegende Querachse schwenkbar an dem Fahrrahmen angelenkt, so dass der Tragrahmen zusammen mit den daran angeordneten Heuwerbungsaggregaten in Form von Rechkreiseln nach vorne/oben verschwenkt bzw. ausgehoben werden kann, wobei der Tragrahmen ggf. abklappbare Seitenteile aufweisen kann, die in der Transportstellung nach vorne geschwenkt werden. Derartige Heuwerbungsmaschinen in Form von Zettern sind beispielsweise aus den Druckschriften EP 18 59 670 A1 oder WO 2010/074558 A1 bekannt.

Da bei derartigen Heuwerbungsmaschinen der genannte Tragrahmen quer zur Fahrtrichtung betrachtet in der Arbeitsstellung eine beträchtliche Erstreckung haben kann, um entsprechend viele Rechkreisel tragen zu können, wird der Tragrahmen regelmäßig gelenkig ausgebildet bzw. in mehrere Abschnitte untergliedert, um eine bessere Bodenanpassung erreichen zu können. Insbesondere kann der Tragrahmen mehrere Teile aufweisen, die relativ zueinander in der abgesenkten Arbeitsstellung um liegende, in Fahrtrichtung weisende Schwenkachsen scharnieren können, wobei zumindest rechts und links von einem Mittelteil zumindest ein solches Rahmenteil vorgesehen ist, das gegenüber dem Mittelteil scharnieren kann. Regelmäßig sind jedoch die seitlichen Rahmenteile selbst in wiederum mehrere Teile untergliedert, die relativ zueinander in der genannten Weise um liegende, in Fahrtrichtung weisende Achsen scharnieren können. Die Heuwerbungsaggregate sind hierbei an verschiedenen Rahmenteilen gelagert und können durch Tasträder am Boden abgestützt sein, um die gewünschte Bodenanpassung zu erreichen.

Bei derartigen Heuwerbungsmaschinen kann es beim Ausheben des Tragrahmens und der daran gelagerten Heuwerbungsaggregate dazu kommen, dass die Heuwerbungsaggregate mit ihren bodennah angeordneten Zinken im Boden einstechen und hängenbleiben bzw. umgekehrt beim Absenken in die Arbeitsstellung in den Boden einstechen, beispielsweise dann, wenn das Gerät auf unebenem Gelände abgesenkt wird. Diese Neigung zum Einstechen im Boden beim Aushub- bzw. Absenkvorgang wird durch die vorgenannte Gelenkigkeit des Tragrahmens und dessen seitliche Teile verstärkt, da hier die äußeren Rahmenteile beim Ausheben des mittleren Tragrahmenteils sich überstrecken und zum Boden hin durchhängen, so dass die bodennahen Bearbeitungswerkzeuge der Heuwerbungsaggregate noch tiefer zu liegen kommen.

Eine andere Problematik bei solchen Heuwerbungsmaschinen betrifft die möglichst bodennahe Führung der Bearbeitungswerkzeuge der Heuwerbungsaggregate. Dies sind regelmäßig um aufrechte Achsen rotatorisch antreibbare Rechkreisel, wobei die genannten aufrechten Achsen leicht nach vorne verkippt sind, so dass die umlaufenden Rechzinken im in Fahrtrichtung betrachtet vorderen Sektor der Umlaufbahn nahe über den Boden streifen. Einerseits soll hier ein geringer Bodenabstand gefahren werden, um kein Erntegut am Boden liegen zu lassen. Andererseits muss der Abstand vom Boden ausreichend groß eingestellt werden, um bei Bodenwellen oder -unebenheiten in den Boden einzustechen. Hierzu ist es bekannt, die Heuwerbungsaggregate verkippbar auszubilden, um die Umlaufbahn im vorderen, bodennahen Bereich absenken bzw. anheben zu können. Eine einzige optimale Einstellung gibt es hier jedoch nicht. Dies zum einen an variierenden Bodenunebenheiten. Zum anderen können jedoch auch bei völlig ebenem Gelände unterschiedliche Bodenbeschaffenheiten verschiedene Einstellungen erfordern, beispielsweise um tiefer einsinkende Stützräder auszugleichen.

Aus der Schrift DE 20 2004 011 969 U1 ist ein Schwader bekannt, von dessen durch ein Fahrwerk abgestütztem Fahrrahmen rechts und links auskragend jeweils ein Rechkreisel aufgehängt ist. Die vom Fahrrahmen auskrangenden, die Rechkreisel tragenden Tragarme können um eine liegende, in Fahrtrichtung weisende Schwenkachse nach oben geschwenkt werden, um die Rechkreisel auszuheben, wobei die Tragarm um eine weitere, in Fahrtrichtung weisende Achse knickbar ausgebildet sind, um beim Nach-oben-Schwenken günstige Hebelverhältnisse zu haben. Aus der DE 20 2006 019 211 U1 ist ferner ein Zetter bekannt, bei dem die Deichsel gegenüber dem die Zetterkreisel tragenden Tragrahmen um eine liegende Querachse verkippbar ist, um für den Straßentransport die Rechkreisel aufwippen zu können und die Bodenfreiheit im jeweils vorderen Sektor der Rechkreisel zu erhöhen. Ferner zeigt die EP 0 131 530 A1 eine Erntemaschine mit in Arbeitsstellung nebeneinander angeordneten, an einen Rahmen angelenkten Arbeitsrotoren, die zum Zwecke des Straßentransports in eine hintereinander angeordnete Konfiguration bringbar sind. Hierzu ist eine am Schlepper angelenkte Deichsel gegenüber dem Rahmen um eine aufrechte Achse verschwenkbar.

Angesichts der beim Stand der Technik bestehenden Probleme liegt der vorliegenden Erfindung die Aufgabe zugrunde, eine verbesserte Heuwerbungsmaschine der eingangs genannten Art zu schaffen, die Nachteile des Standes der Technik vermeidet und Letzteren in vorteilhafter Weise weiterbildet. Insbesondere soll beim Ausheben bzw. Absenken der Heuwerbungsaggregate in die bzw. aus der Vorgewende-/Transportstellung ein Einstechen in den Boden vermieden, eine Verletzungsgefahr für die Grasnarbe und Beschädigungsgefahr für die Werkzeuge beim Ausheben/Absenken sowie im Betrieb verringert und gleichzeitig die Bodenanpassung im Arbeitsbetrieb verbessert werden.

Erfindungsgemäß wird diese Aufgabe durch eine Heuwerbungsmaschine gemäß Anspruch 1 gelöst. Bevorzugte Ausgestaltungen der Erfindung sind Gegenstand der abhängigen Ansprüche.

Es wird also vorgeschlagen, den aushebbaren, die Heuwerbungsaggregate tragenden Tragrahmen nicht mehr direkt am Fahrrahmen anzulenken, sondern zwischen Fahrrahmen und Tragrahmen eine mehrfache Gelenkigkeit vorzusehen, um eine bessere Verschwenkbarkeit des die Heuwerbungsaggregate tragenden Tragrahmens mit mehr Freiheitsgraden zu erreichen. Erfindungsgemäß ist zwischen dem durch ein Fahrwerk am Boden abgestützten Fahrrahmen und dem die Bearbeitungsaggregate tragenden Tragrahmen ein Zwischenrahmen vorgesehen, der einerseits um eine erste liegende Querachse schwenkbar am Fahrrahmen angelenkt ist und andererseits um eine zweite liegende Querachse schwenkbar mit dem Tragrahmen verbunden ist, wobei die Hub-/Schwenkvorrichtung zum Verschwenken der Bearbeitungsaggregate derart ausgebildet ist, dass der Tragrahmen und der Zwischenrahmen einerseits relativ zueinander schwenkbar sind, um die Winkellage der Bearbeitungsaggregate relativ zum Boden zu verändern, und andererseits gemeinsam relativ zum Fahrrahmen schwenkbar sind, um in die Vorgewende- und/oder Transportstellung verbracht zu werden. Die Zwischenschaltung des genannten Zwischenrahmens und dessen Gelenkigkeit gegenüber dem Fahrrahmen und gegenüber dem Tragrahmen erlaubt es, die Ausrichtung bzw. Anstellung der Bearbeitungsaggregate gegenüber dem Boden besser einzustellen bzw. zu verändern, gleichzeitig aber auch beim Ausheben der Bearbeitungsaggregate in die Vorgewende- bzw. Transportstellung oder umgekehrt beim Absenken in die Arbeitsstellung ein Einstechen der Bearbeitungswerkzeuge im Boden besser zu vermeiden.

In Weiterbildung der Erfindung kann hierbei die Hub-/Schwenkvorrichtung Folgesteuermittel besitzen bzw. derart ausgebildet sein, dass in verschiedenen Phasen des Aushub-/Absenkprozesses der Tragrahmen und der Zwischenrahmen unterschiedlich zueinander und gegenüber dem Hauptrahmen verschwenkt werden. Insbesondere kann vorgesehen sein, dass der Tragrahmen und der Zwischenrahmen von der Hub-/Schwenkvorrichtung in einer ersten Aushubphase relativ zueinander um die vorgenannten zweite Querachse, die den Zwischenrahmen mit dem Tragrahmen verbindet, verschwenkt werden derart, dass die Bearbeitungsaggregate etwa parallel zum Boden und/oder in einer gegenüber der Arbeitsstellung weiter vom Boden entfernten Zwischenstellung verbracht werden, während in einer zweiten Aushubphase der Tragrahmen und der Zwischenrahmen gemeinsam um die erste Querachse, die den Zwischenrahmen mit dem Fahrrahmen verbindet, relativ zum Fahrrahmen in die Vorgewende- bzw. Transportstellung verschwenkt werden, wobei Letzteres vorzugsweise ohne weitere Relativschwenkbewegung zwischen Tragrahmen und Zwischenrahmen erfolgen kann. Gegebenenfalls kann aber auch, insbesondere bei separater Steuerung beider Schwenkachsen, eine Überlagerung der Schwenkbewegungen um die beiden Querachsen erfolgen. Durch das vorausgehende Verschwenken des Tragrahmens gegenüber dem Zwischenrahmen in die vorgenannten Zwischenstellung werden die Bearbeitungswerkzeuge der Heuwerbungsaggregate in eine weniger einstichgefährdete Stellung verbracht, so dass beim Ausheben die Bearbeitungswerkzeuge weiter vom Boden entfernt sind und nicht mehr einstechen können, insbesondere an den seitlichen, äußeren Tragarmteilen, die durch Überstrecken beim Ausheben durchhängen können.

Das relative Verschwenken von Tragrahmen und Zwischenrahmen in der vorgenannten ersten Aushubphase kann grundsätzlich in verschiedener Art und Weise bewerkstelligt werden. Vorteilhafterweise wird hierbei der Zwischenrahmen um die erste Querachse, die den Zwischenrahmen mit dem Fahrrahmen verbindet, aufwärts verschwenkt, während der Tragrahmen in gegenläufiger Richtung um die zweite Querachse relativ zum Zwischenrahmen verschwenkt. Insbesondere kann beim anfänglichen Anheben des Zwischenrahmens der Tragrahmen gegenüber dem Zwischenrahmen nach hinten bzw. unten abknicken, so dass die am Tragrahmen gelagerten Heuwerbungsaggregate an sich noch nicht vom Boden wegbewegt werden bzw. auf ggf. vorhandenen Tasträdern am Boden abgestützt bleiben und nur eine Verkippung des Tragrahmens und der daran gelagerten Bearbeitungsaggregate erfolgt, insbesondere derart, dass die vorderen, näher am Zwischenrahmen angeordneten und üblicherweise tiefer am Boden liegenden Abschnitte der Bearbeitungsaggregate weiter angehoben werden. Erst nachdem diese Ausrichtung der Bearbeitungsaggregate erfolgt ist, wird der Tragrahmen bei der Schwenkbewegung des Zwischenrahmens nach vorne/oben mitgenommen und gemeinsam mit dem Zwischenrahmen um die erste Gelenkachse relativ zum Fahrrahmen verschwenkt. Beim Absenken der Heuwerbungsaggregate aus der Vorgewende- und/oder Transportstellung in die Arbeitsstellung wird vorteilhafterweise in umgekehrter Reihenfolge bzw. Abfolge der Bewegungen vorgegangen.

In vorteilhafter Weiterbildung der Erfindung kann es hierbei ausreichend sein, wenn die Hub-/Schwenkvorrichtung zum Ausheben des Tragrahmens und der daran gelagerten Heuwerbungsaggregate nur einen Stellaktor besitzt, wobei vorteilhafterweise die mehrphasige Aushubbewegung mit verschiedenen Schwenkbewegungen durch einen begrenzten Freigang bzw. Freilauf an der zweiten Querachse zwischen dem Zwischenrahmen und dem Tragrahmen erreicht werden kann. Eine solche Ausbildung mit nur einem Stellaktor ist andererseits nicht zwingend, da auch mehrere Stellaktoren zur Steuerung der einen oder verschiedener Schwenkbewegungen vorgesehen sein können.

Insbesondere kann in vorteilhafter Weiterbildung der Erfindung die Hub-/Schwenkvorrichtung einen zwischen dem Fahrrahmen und dem Zwischenrahmen vorgesehenen Stellaktor zum Verschwenken des Zwischenrahmens um die vorgenannte erste Querachse relativ zum Fahrrahmen umfassen, wobei der Tragrahmen vorteilhafterweise relativ zum Zwischenrahmen bezüglich der zweiten Querachse einen Freigang besitzt, der durch einen Schwenkbegrenzer begrenzt ist derart, dass bei einem anfänglichen Ausheben bzw. Verschwenken des Zwischenrahmens aus der Arbeitsstellung der daran angelenkte Tragrahmen nicht gleich mitgenommen wird, sondern bezüglich des Zwischenrahmens abknickt und/oder gegenläufig verschwenkt und erst bei einem weiteren Ausheben bzw. Verschwenken des Zwischenrahmens der Schwenkbegrenzer eingreift und den Tragrahmen mitnimmt derart, dass der Zwischenrahmen und der Tragrahmen gemeinsam um die erste Querachse gegenüber dem Fahrrahmen schwenken und angehoben werden. Die genannte Freigängigkeit des Tragrahmens gegenüber dem Zwischenrahmen, die Schwenkbewegungen des Tragrahmens gegenüber dem Zwischenrahmen zulässt, kann vorteilhafterweise in Weiterbildung der Erfindung auch dazu genutzt werden, im Arbeitsbetrieb eine Bodenanpassung des Tragrahmens und der daran gelagerten Heuwerbungsaggregate zu erreichen, indem der Tragrahmen um die vorgenannte zweite Querachse relativ zum Zwischenrahmen verkippen kann.

In Weiterbildung der Erfindung kann die Schwenkbarkeit bzw. Knickbarkeit des die Heuwerbungsaggregate tragenden Tragrahmens gegenüber dem vorgenannten Zwischenrahmen durch einen Stellaktor vorzugsweise während des Arbeitsbetriebs und/oder automatisch gesteuert werden. Insbesondere kann die Hub-/Schwenkvorrichtung einen Stellaktor zwischen dem Zwischenrahmen und dem Tragrahmen zum Verstellen der Knickstellung von Zwischenrahmen und Tragrahmen bezüglich der zweiten Querachse aufweisen, so dass der die Heuwerbungsaggregate tragende Tragrahmen nach Art einer Knickdeichsel gegenüber dem Zwischenrahmen abgeknickt werden kann, wodurch die am Tragrahmen gelagerten Arbeitsaggregate mehr oder weniger nach vorne bzw. hinten kippen und die Arbeitshöhe der Heuwerbungsaggregate über dem Boden verändert werden kann.

Vorzugsweise sind hierbei dem genannten Stellaktor vom Schlepper her betätigbare Steuermittel zugeordnet, so dass die Verstellung der genannten Knickstellung vom Schlepper her gesteuert werden kann, ohne dass ein Schlepperführer hierzu absteigen müsste.

In Weiterbildung der Erfindung kann die Steuerung der genannten Knickstellung zwischen dem Tragrahmen und dem Zwischenrahmen auch automatisch in Abhängigkeit des Bodenprofils erfolgen. Insbesondere können Erfassungsmittel zur Erfassung des Anstellwinkels der Heuwerbungsaggregate zum Boden und/oder zur Erfassung eines Bodenabstands eines Abschnitts der Heuwerbungsaggregate oder des Tragrahmens vom Boden vorgesehen sein, wobei dem Stellaktor eine Regelvorrichtung zugeordnet ist, die den Stellaktor in Abhängigkeit des erfassten Anstellwinkels und/oder des erfassten Bodenabstands ansteuert und hierdurch die Bearbeitungswerkzeuge der Heuwerbungsaggregate in gewünschter Weise über den Boden führt und den Knickwinkel zwischen Tragrahmen und Zwischenrahmen an die Bodenkontur anpasst.

Der genannte Stellaktor zur Verstellung des Knickwinkels zwischen Zwischenrahmen und Tragrahmen kann grundsätzlich verschieden ausgebildet sein, wobei in vorteilhafter Weiterbildung der Erfindung ein hydraulischer Aktor beispielsweise in Form eines Hydraulikzylinders vorgesehen sein kann. Alternativ oder zusätzlich kann als Stellaktor auch ein Elektromotor beispielsweise in Form eines Spindeltriebs vorgesehen sein. Durch einen solchen elektrischen Antrieb wird die Ansteuerung und die Regelbarkeit erleichtert, während ein hydraulischer Antrieb die Verwendbarkeit älterer Schlepper erleichtert.

Auch der vorgenannte Stellaktor zum Ausheben des Tragrahmens und der daran gelagerten Heuwerbungsaggregate zusammen mit dem Zwischenrahmen in die Vorgewende- bzw. Transportstellung kann grundsätzlich verschieden ausgebildet sein. In bevorzugter Weiterbildung der Erfindung kann hier ein hydraulischer Stellaktor beispielsweise in Form eines Hydraulikzylinders vorgesehen sein. Alternativ oder zusätzlich kann auch ein elektrischer Antrieb beispielsweise in Form eines Spindeltriebs vorgesehen sein.

Um beim Verschwenken des Zwischenrahmens aus der abgesenkten Arbeitsstellung zunächst mit relativ kleinen Schwenkwinkeln des Zwischenrahmens eine ausreichende Planstellung des Tragrahmens bzw. der daran angelenkten Heuwerbungsaggregate zu erreichen, kann in vorteilhafter Weiterbildung der Erfindung der Zwischenrahmen derart ausgebildet und/oder angeordnet sein, dass sich der Zwischenrahmen in der abgesenkten Arbeitsstellung im Wesentlichen liegend ausgerichtet vom Fahrrahmen aus und/oder von der ersten liegenden Querachse nach hinten erstreckt, so dass sich die erste und die zweite liegende Querachse näherungsweise auf etwa demselben Niveau über dem Boden erstrecken bzw. eine senkrechte Verbindungsgerade zwischen den beiden Querachsen gegenüber einer Horizontalen nur leicht spitzwinklig geneigt ist.

Von der Länge her kann der Zwischenrahmen verschieden ausgebildet sein und an die Größenverhältnisse des Tragrahmens angepasst sein. Nach einer vorteilhaften Weiterbildung der Erfindung kann die Länge des Zwischenrahmens - gemessen senkrecht zu den sich quer erstreckenden Schwenkachsen - im Bereich von etwa 20 % bis 150 %, vorzugsweise 30 % bis 80 % der Längserstreckung des Tragrahmens betragen, wobei Letztere ebenfalls senkrecht zu der genannten zweiten Querachse gemessen wird.

Der Tragrahmen, der über den Zwischenrahmen kipp- und schwenkbar ist, kann in Weiterbildung der Erfindung mehrere Teile umfassen, die zueinander knickbar sind. Insbesondere können abklappbare Seitenteile vorgesehen sein, die an einem Mittelteil schwenkbar angelenkt sind, der in der vorgenannten Weise um die zweite Querachse schwenkbar am Zwischenrahmen angelenkt ist. Insbesondere können die genannten Seitenteile um Achsen scharnieren, die in Arbeitsstellung näherungsweise liegend in Fahrtrichtung weisen und in der ausgehobenen Stellung des Tragrahmens näherungsweise aufrecht stehen, so dass die Seitenteile nach vorne in eine Transportstellung an den Fahrrahmen angeklappt werden können. Vorzugsweise kann der Tragrahmen bzw. dessen Mittelteil um die beiden vorgenannten liegenden Querachsen gegenüber dem Fahrrahmen über einen Winkelbereich von mehr als 60° und insbesondere etwa 90° verschwenkt werden, insbesondere derart, dass der Tragrahmen aus einer etwa liegenden Arbeitsstellung in eine etwa aufrechte Transportstellung schwenkbar ist.

Die Erfindung wird nachfolgend anhand bevorzugter Ausführungsbeispiele und zugehöriger Zeichnungen näher erläutert. In den Zeichnungen zeigen:
- Fig. 1:: eine schematische Seitenansicht einer Heuwerbungsmaschine in Form eines Zetters nach einer vorteilhaften Ausführung der Erfindung, wobei die Heuwerbungsaggregate in Form von Rechkreiseln in ihrer abgesenkten Arbeitsstellung gezeigt sind,
- Fig. 2:: eine schematische Seitenansicht der Heuwerbungsmaschine aus Fig. 1, wobei die Heuwerbungsaggregate in ihrer ausgehobenen Transportstellung gezeigt sind,
- Fig. 3:: eine schematische Seitenansicht der Heuwerbungsmaschine aus den vorhergehenden Figuren, wobei die Heuwerbungsaggregate in einer ausgehobenen Vorgewendestellung gezeigt sind,
- Fig. 4:: eine ausschnittsweise, vergrößerte Ansicht des die Heuwerbungsaggregate tragenden Tragrahmens und des zwischen dem Tragrahmen und dem Fahrrahmen vorgesehenen Zwischenrahmens, wobei die abgesenkte Arbeitsstellung gezeigt ist und ein Stellaktor zur Einstellung des Knickwinkels zwischen Zwischenrahmen und Tragrahmen gezeigt ist, und
- Fig. 5:: eine ausschnittsweise, schematische Seitenansicht von Tragrahmen und Zwischenrahmen in einer verschwenkten Zwischenstellung, in der die Rechkreisel der Heuwerbungsaggregate näherungsweise bodenparallel ausgerichtet sind, bevor sie durch weiteres Ausheben des Zwischenrahmens nach oben verschwenkt werden.

Die Heuwerbungsmaschine 1 umfasst vorteilhafterweise einen länglichen Fahrrahmen 2, der mit seinem vorderen Ende durch eine an sich übliche Anbauvorrichtung 3 an einem nicht gezeigten Schlepper angebaut werden kann und durch ein Fahrwerk 4, das vorteilhafterweise an einem heckseitigen Abschnitt des Fahrrahmens 2 angeordnet sein kann, am Boden abgestützt ist. Die genannte Anbauvorrichtung 3 kann hierbei verschieden ausgebildet sein und vorteilhafterweise eine Verschwenkung des Fahrrahmens 2 gegenüber dem Schlepper um eine aufrechte Achse zulassen, so dass der Fahrrahmen 2 nach Art eines Trailers dem Schlepper hinterherlaufen kann.

An dem genannten Fahrrahmen 2 sind in noch näher zu erläuternder Weise als Heuwerbungsaggregate eine Mehrzahl von Rechkreiseln 5 angelenkt, die in der Arbeitsstellung um näherungsweise aufrechte Kreiselachsen 6 rotatorisch antreibbar sind und umlaufende Rechzinken umfassen, mittels derer auf dem Boden liegendes Erntegut wie beispielsweise Gras oder Heu zusammengerecht, geschwadet, gezettet oder in anderer Weise bearbeitet werden kann. Der Antrieb zum rotatorischen Antreiben der Rechkreisel 5 kann verschieden ausgebildet sein, beispielsweise eine Gelenkwelle, ggf. mit Verteilergetriebe umfassen, um die Rechkreisel 5 von einer Zapfwelle des Schleppers her anzutreiben.

Die genannten Rechkreisel 5 sind hierbei an einem Tragrahmen 7 aufgehängt, der gegenüber dem Fahrrahmen 2 aushebbar und verschwenkbar ist. Die Rechkreisel 5 sind hierbei vorteilhafterweise durch Stützräder 8 bzw. Tasträder am Boden abgestützt, wobei in der gezeichneten Ausführung unter jedem Rechkreisel 5 ein solches Stützrad 8 vorgesehen ist.

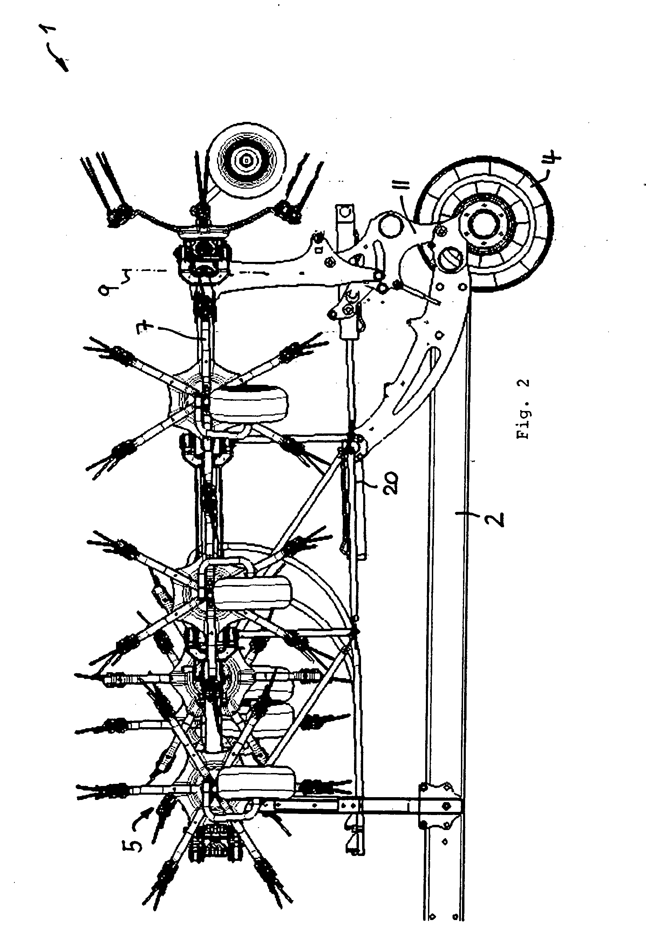

Die in Arbeitsstellung seitlich auskragenden Seitenteile des Tragrahmens 7 sind vorteilhafterweise in mehrere Tragrahmenteile unterteilt, die relativ zueinander um Scharnierachsen scharnieren können, die in der Arbeitsstellung liegend in Fahrtrichtung weisen, um eine entsprechende Bodenanpassung über die Breite des Geräts zuzulassen. Durch die in Fig. 2 gezeigte Scharnierachse 9 kann hierbei in der ausgehobenen Stellung der gesamte Seitenteil des Tragrahmens 7 mit den daran angelenkten Rechkreiseln 5 nach vorne verschwenkt werden, so dass sich die Seitenteile des Tragrahmens mit den daran angelenkten Rechkreiseln 5 näherungsweise parallel zum Fahrrahmen 2 entlang dem Fahrrahmen nach vorne erstrecken, vgl. Fig. 2, um die Arbeitsbreite entsprechend zu verkleinern.

Ein zentraler Mittelteil des genannten Tragrahmens 7 umfasst hierbei einen die Rechkreisel 5 übergreifenden und in der Arbeitsstellung nach vorne zum Fahrrahmen 2 hin weisenden Anlenkteil 10, der der Anlenkung des Tragrahmens 7 am Fahrrahmen 2 dient.

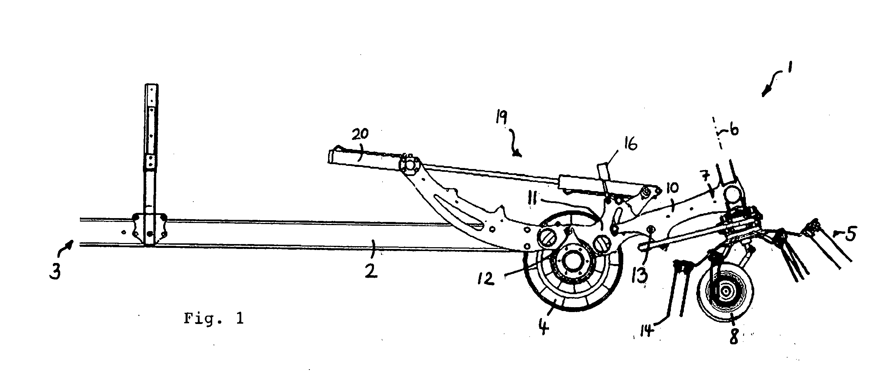

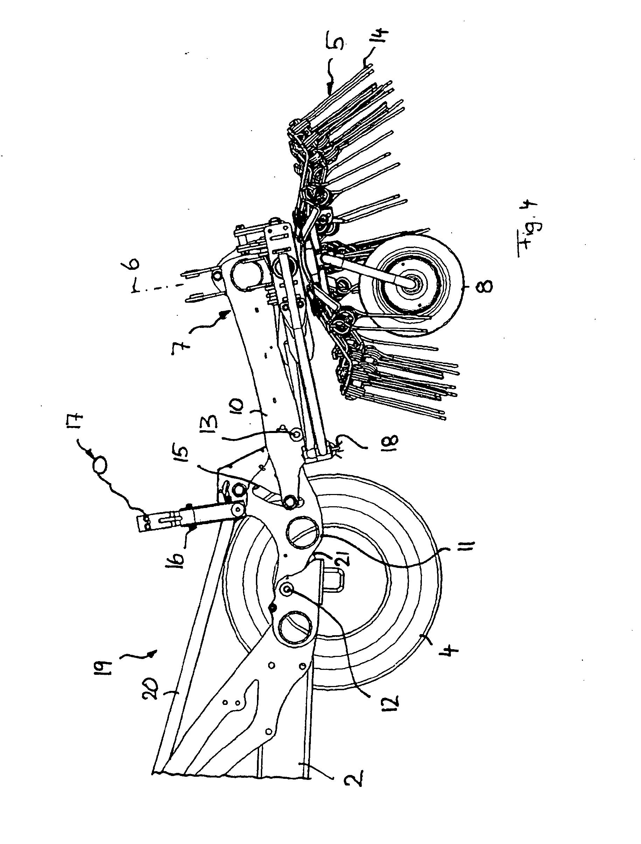

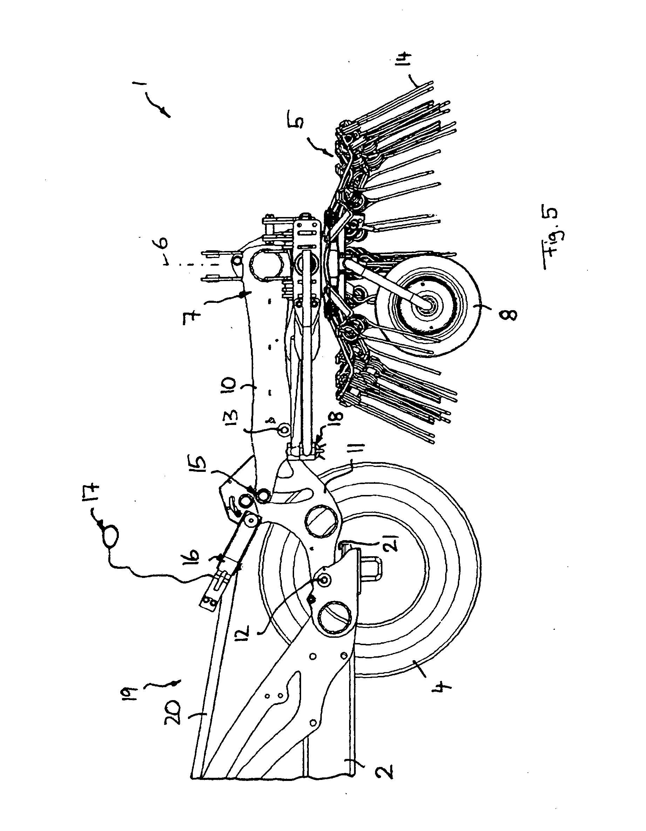

Genauer gesagt ist der genannte Anlenkteil 10 des Tragrahmens 7 an einem Zwischenrahmen 11 angelenkt, der sich zwischen dem Fahrrahmen 2 und dem Tragrahmen 7 erstreckt. Wie ein Vergleich der Figuren 1 bis 3 zeigt, ist der genannte Zwischenrahmen 11 einerseits um eine erste liegende Querachse 12 schwenkbar an dem Fahrrahmen 2 angelenkt, wobei sich die genannte erste Querachse 12 im Bereich des Fahrwerks 4, vorzugsweise unmittelbar über dem Fahrwerk 4, erstreckt, so dass die beim Ausheben in den Fahrrahmen 2 eingeleitete Gewichtskraft der Rechkreisel 5 unmittelbar über das Fahrwerk 4 abgeleitet werden kann. Andererseits ist der genannte Zwischenrahmen 11 um eine zweite liegende Querachse 13 gelenkig bzw. knickbar mit dem Anlenkteil 10 des Tragrahmens 7 verbunden, so dass der Zwischenrahmen 11 und der Tragrahmen 7 zueinander abgeknickt werden können, wie dies ein Vergleich der Figuren 4 und 5 zeigt.

In der gezeichneten Ausführung sind die Größenverhältnisse von Zwischenrahmen 11 und Tragrahmen 7 derart gewählt, dass der Abstand der beiden liegenden Querachsen 12 und 13, der durch die Länge des Zwischenrahmens 11 bestimmt wird, ein wenig kleiner ist als die Längserstreckung des Tragrahmens 7 in Fahrtrichtung, d.h. die Erstreckung von der zweiten Querachse 13 zur mittleren Rechkreiselachse 6. Vorteilhafterweise kann der Anlenkteil 10 des Tragrahmens 7 näherungsweise derart bemessen sein, dass die zweite Querachse 13 näherungsweise im Bereich des vordersten Abschnitts der Umlaufbahn der Rechzinken 14 liegt. Je nach Konfiguration der Heuwerbungsmaschine können diese Größenverhältnisse und Lageverhältnisse jedoch variieren.

Die Knickbarkeit des Tragrahmens 7 gegenüber dem Zwischenrahmen 11 ist hierbei vorteilhafterweise durch zumindest einen Schwenkbegrenzer 15 begrenzt. Vorteilhafterweise kann die Schwenkbarkeit in beide Richtungen durch zwei Schwenkbegrenzer 15 begrenzt sein, die in der gezeichneten Ausführung von den Enden einer langlochartigen Führung gebildet werden, in der ein von der Querachse 13 beabstandeter Abschnitt des Tragrahmens 7 läuft, wobei natürlich auch umgekehrt ein entsprechend von der Querachse 13 beabstandeter Abschnitt des Zwischenrahmens 11 in einem Langloch im Tragrahmen 7 laufen könnte.

Um den Anstellwinkel der Rechkreisel 5 zum Boden variieren bzw. einstellen zu können, ist der genannten zweiten Querachse 13 zwischen dem Zwischenrahmen 11 und dem Tragrahmen 7 ein Stellaktor 16 zugeordnet, der in der gezeichneten Ausführung ein Hydraulikzylinder ist, ggf. aber auch ein anderer Schwenkantrieb sein könnte. Der Stellaktor 16 verschwenkt den Tragrahmen 7 relativ zum Zwischenrahmen 11 um die zweite Querachse 13, vgl. im Vergleich die Figuren 4 und 5.

Vorteilhafterweise kann der genannte Stellaktor 16 durch Steuermittel vom Schlepper her gesteuert werden, so dass ein Schlepperführer nicht eigens absteigen muss.

Alternativ oder zusätzlich kann der Stellaktor 16 von einer Steuer- bzw. Regelvorrichtung 17 angesteuert werden, die den Anstellwinkel der Rechkreisel 5 durch entsprechendes Abknicken des Tragrahmens 7 gegenüber dem Zwischenrahmen 11 in Abhängigkeit des Bodenprofils regelt. Hierzu kann an einem Abschnitt des Tragrahmens 7 oder beispielsweise den Schutzbügeln der Rechkreisel 5 ein Abstandssensor 18 vorgesehen sein, der den Bodenabstand des entsprechenden Abschnitts des Tragrahmens 7 bzw. der Rechkreisel 5 erfasst. Je nachdem, ob der erfasste Bodenabstand zunimmt oder abnimmt, verändert der Stellaktor 16 die Knickstellung zwischen Tragrahmen 7 und Zwischenrahmen 11, so dass sich der Anstellwinkel der Rechkreisel 5 ändert bzw. der vordere Abschnitt der Umlaufbahn der Rechkreisel 5 angehoben wird, um ein Einstechen in Bodenerhebungen zu vermeiden bzw. ein Liegenlassen von Erntegut in Bodensenken zu vermeiden. Insbesondere versucht die Regelvorrichtung 17 einen gleich bleibenden Bodenabstand der Rechkreisel 5 einzustellen.

Weiterhin umfasst die Hub-/Schwenkvorrichtung 19 zum Ausheben des Tragrahmens 7 und der daran angelenkten Rechkreisel 5 in eine Vorgewende- bzw. Transportstellung einen Stellaktor 20 zwischen dem Fahrrahmen 2 und dem Zwischenrahmen 11, um den Zwischenrahmen 11 gegenüber dem Fahrrahmen 2 verschwenken und ausheben zu können. Der genannte Stellaktor 20 kann beispielsweise ein Hydraulikzylinder sein, der einerseits am Fahrrahmen 2 bzw. einer damit verbundenen Konsole und andererseits an dem Zwischenrahmen 11 bzw. einer daran befestigten Konsole angelenkt ist, und zwar jeweils von der ersten Querachse 12 beabstandet, um einen entsprechenden Hebel zu haben.

Wie die Figuren 4, 5, 3 und 2 nacheinander zeigen, kann hierdurch eine mehrphasige Aushubbewegung mit unterschiedlichen Schwenkbewegungskomponenten erzielt werden: Zunächst befindet sich der Zwischenrahmen 11 in der gänzlich abgesenkten Arbeitsstellung, die Fig. 4 zeigt. Der Zwischenrahmen 11 kann hierbei durch den Stellaktor 20 gehalten werden bzw. vom weiteren Absinken bewahrt werden, beispielsweise dadurch, dass der entsprechende Stellaktor 20 nicht weiter ausfahrbar ist. Alternativ kann die Schwenkbarkeit des Zwischenrahmens 11 gegenüber dem Fahrrahmen 2 durch einen Schwenkbegrenzer 21 begrenzt sein, so dass der Stellaktor 20 in der abgesenkten Arbeitsstellung kraftlos bzw. in Schwimmstellung geschaltet sein kann bzw. unbelastet bleibt.

Wird durch Betätigung des Stellaktors 20 der Zwischenrahmen 11 nach vorne/oben verschwenkt, wird während einer anfänglichen Schwenkphase der am Zwischenrahmen 11 angelenkte Tragrahmen 7 nicht mitgenommen bzw. genauer gesagt nicht mit um die erste Querachse 12 verschwenkt. Durch den vorgenannten Freigang knickt der Tragrahmen 7 lediglich gegenläufig ab, wodurch sich die Rechkreisel 5 in eine näherungsweise bodenparallele Stellung ausrichten, vgl. Fig. 5.

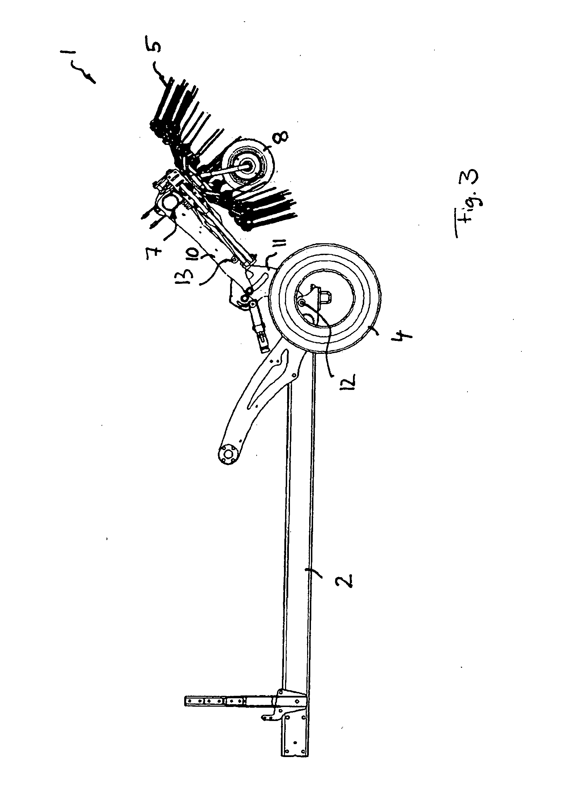

Erreicht die Schwenkbarkeit des Tragrahmens 7 gegenüber dem Zwischenrahmen 11 den Schwenkbegrenzer 15, vgl. Fig. 5, wird bei weiterem Verschwenken des Zwischenrahmens 11 der Tragrahmen 7 mitgenommen, so dass der Zwischenrahmen 11 und der Tragrahmen 7 gemeinsam um die erste Querachse 12 nach oben bzw. vorne verschwenkt werden, und zwar zunächst bis in die in Fig. 3 gezeigte Vorgewendestellung und sodann ggf. weiter bis in die in Fig. 2 gezeigte Transportstellung, in der der Tragrahmen 7 im Wesentlichen aufrecht über die erste Querachse 12 geschwenkt ist. In dieser Stellung können sodann die abklappbaren Seitenteile des Tragrahmens 7 nach vorne geschwenkt werden, um die genannten Seitenteile mit den daran vorgesehenen Rechkreiseln 5 an den Fahrrahmen 2 anzuklappen.

## Patentansprüche

1. Heuwerbungsmaschine, vorzugsweise Zetter, mit einem an einen Schlepper anbaubaren Fahrrahmen (2), der über ein Fahrwerk (4) am Boden abgestützt ist, sowie einer Mehrzahl von Heuwerbungsaggregaten (5), die an einem Tragrahmen (7) gelagert sind, der relativ zum Fahrrahmen (2) zusammen mit den Heuwerbungsaggregaten (5) von einer Hub-/Schwenkvorrichtung (19) in einer Vorgewende- und/oder Transportstellung aushebbar ist, wobei die Hub-/Schwenkvorrichtung (19) derart ausgebildet ist, dass zuerst die Winkellage der Heuwerbungsaggregate (5) relativ zum Boden veränderbar ist und dann in einem weiteren Schritt die Heuwerbungsaggregate (5) in die Vorgewende- und/oder Transportstellung verbringbar sind, **dadurch gekennzeichnet, dass** zwischen dem Fahrrahmen (2) und dem Tragrahmen (7) ein Zwischenrahmen (11) vorgesehen ist, der einerseits um eine erste liegende Querachse (12) schwenkbar an dem Fahrrahmen (2) angelenkt ist und andererseits um eine zweite liegende Querachse (13) schwenkbar mit dem Tragrahmen (7) verbunden ist, wobei die Hub-/Schwenkvorrichtung (19) derart ausgebildet ist, dass der Tragrahmen (7) und der Zwischenrahmen (11) einerseits relativ zueinander schwenkbar sind, um die Winkellage der Heuwerbungsaggregate (5) relativ zum Boden zu verändern, und andererseits gemeinsam relativ zum Tragrahmen um die erste Querachse (12) schwenkbar sind, um in die Vorgewende- und/oder Transportstellung verbracht zu werden.

2. Heuwerbungsmaschine nach dem vorhergehenden Anspruch, wobei der Tragrahmen (7) und der Zwischenrahmen (11) von der Hub-/Schwenkvorrichtung (19) in einer ersten Aushubphase relativ zueinander um die zweite Querachse (13) verschwenkt werden derart, dass die Heuwerbungsaggregate (5) etwa parallel zum Boden und/oder in eine gegenüber der Arbeitsstellung weiter vom Boden entfernte Zwischenstellung verbracht werden, und in einer zweiten Aushubphase gemeinsam um die erste Querachse (12) relativ zum Fahrrahmen (2) in die Vorgewende- und/oder Transportstellung verschwenkt werden.

3. Heuwerbungsmaschine nach dem vorhergehenden Anspruch, wobei in der genannten ersten Aushubphase der Zwischenrahmen (11) um die erste Querachse (12) aufwärts verschwenkt wird, wobei der Tragrahmen (7) in gegenläufiger Richtung um die zweite Querachse (13) relativ zum Zwischenrahmen (11) verschwenkt.

4. Heuwerbungsmaschine nach einem der vorhergehenden Ansprüche, wobei die Hub-/Schwenkvorrichtung (19) einen zwischen dem Fahrrahmen (2) und dem Zwischenrahmen (11) vorgesehenen Stellaktor (20) zum Verschwenken des Zwischenrahmens (11) um die erste Querachse (12) relativ zum Fahrrahmen (2) umfasst und der Tragrahmen (7) relativ zum Zwischenrahmen (11) bezüglich der zweiten Querachse (13) einen Freigang besitzt, der durch einen Schwenkbegrenzer (15) begrenzt ist derart, dass bei einem anfänglichen Ausheben des Zwischenrahmens (11) aus der abgesenkten Arbeitsstellung der Tragrahmen (7) relativ zum Zwischenrahmen (11) abknickt und/oder gegenläufig verschwenkt und bei weiterem Ausheben/Schwenken des Zwischenrahmens (11) der Schwenkbegrenzer (15) den Tragrahmen (7) mitnimmt derart, dass der Zwischenrahmen (11) und der Tragrahmen (7) gemeinsam um die erste Querachse (12) relativ zum Fahrrahmen (2) verschwenken.

5. Heuwerbungsmaschine nach dem vorhergehenden Anspruch, wobei der Freigang des Tragrahmens (7) bezüglich der zweiten Querachse (13) in beide Richtungen begrenzt ist derart, dass der Stellaktor in der Arbeitsstellung entspannbar und/oder in Schwimmstellung bringbar ist und der Zwischenrahmen (11) und dem Tragrahmen (7) im Arbeitsbetrieb bei entspannter Hub-/Schwenkvorrichtung (19) durch einen Schwenkbegrenzer in einer vorbestimmten Stellung gehalten ist.

6. Heuwerbungsmaschine nach einem der vorhergehenden Ansprüche, wobei die Hub-/Schwenkvorrichtung (19) einen Stellaktor (16) zwischen dem Zwischenrahmen (11) und dem Tragrahmen (7) zum Verstellen der Knickstellung von Zwischenrahmen (11) und Tragrahmen (7) bezüglich der zweiten Querachse (13) aufweist.

7. Heuwerbungsmaschine nach dem vorhergehenden Anspruch, wobei dem Stellaktor (16) vom Schlepper her betätigbare Steuermittel zur Verstellung der Knickstellung zwischen Tragrahmen (7) und Zwischenrahmen (11) zugeordnet sind.

8. Heuwerbungsmaschine nach einem der beiden vorhergehenden Ansprüche, wobei Erfassungsmittel (18) zur Erfassung des Anstellwinkels der Heuwerbungsaggregate zum Boden und/oder zur Erfassung eines Bodenabstands eines Abschnitts eines Heuwerbungsaggregats und/oder des Tragrahmens (7) vom Boden vorgesehen sind und dem Stellaktor (16) eine Steuerund/oder Regelvorrichtung zur Einstellung der Knickstellung zwischen Tragrahmen (7) und Zwischenrahmen (11) in Abhängigkeit des erfassten Anstellwinkels und/oder des erfassten Bodenabstands zugeordnet ist.

9. Heuwerbungsmaschine nach einem der vorhergehenden Ansprüche, wobei der Zwischenrahmen (11) derart ausgebildet und/oder angeordnet ist, dass der Zwischenrahmen (11) in seiner abgesenkten Arbeitsstellung eine etwa liegende Ausrichtung einnimmt und/oder die erste und die zweite liegende Querachse (12, 13) in einer näherungsweise bodenparallelen Ebene liegen und/oder der Zwischenrahmen eine rückwärtige Verlängerung des Fahrrahmens (2) bildet und/oder der Zwischenrahmen (11) in Fahrtrichtung betrachtet nach hinten über das Fahrwerk (4) vorspringt.

10. Heuwerbungsmaschine nach einem der vorhergehenden Ansprüche, wobei eine Länge des Zwischenrahmens (11) senkrecht zu den Querachsen (12, 13) etwa im Bereich von 20 % bis 150 %, vorzugsweise 30 % bis 80 %, der Längserstreckung des Tragrahmens (7) senkrecht zur Querachse (13) beträgt.

11. Heuwerbungsmaschine nach einem der vorhergehenden Ansprüche, wobei der Tragrahmen (7) abklappbare Seitenteite umfasst, die an einem Mittelteil (10) des Tragrahmens (7), der um die zweite liegende Querachse (13) schwenkbar an dem Zwischenrahmen (11) angelenkt ist, schwenkbar angelenkt sind, insbesondere derart, dass die genannten Seitenteile in der abgesenkten Arbeitsstellung um liegende, in Fahrtrichtung weisende Achsen scharnieren und/oder in der ausgehobenen Transportstellung nach vorne an den Fahrrahmen (2) anklappbar sind.

## Claims

1. A hay-making machine, preferably a tedder, having a vehicle frame (2) which can be attached to a tractor and which is supported at the ground via a chassis (4) as well as having a plurality of hay-making units (5) which are supported at a support frame (7) which can be lifted relative to the vehicle frame (2) together with the hay-making units (5) by a lifting/pivoting apparatus (19) into a headland position and/or transport position, wherein the lifting/pivoting apparatus (19) is configured such that the angular position of the hay-making units (5) can first be changed relative to the ground and then in a further step the hay-making units (5) can be brought into the headland position and/or transport position,
**characterised in that**
an intermediate frame (11) is provided between the vehicle frame (2) and the support frame (7) which is, on the one hand, pivotally connected to the vehicle frame (2) pivotable about a first horizontal transverse axle (12) and which is, on the other hand, connected to the support frame (7) pivotable about a second horizontal transverse axle (13), with the lifting/pivoting apparatus (19) being configured such that the support frame (7) and the intermediate frame (11) are pivotable relative to one another, on the one hand, to change the angular position of the hay-making units (5) relative to the ground and are pivotable together relative to the support frame about the first transverse axle (12), on the other hand, to be brought into the headland position and/or transport position.

2. A hay-making machine in accordance with the preceding claim, wherein the support frame (7) and the intermediate frame (11) are pivoted relative to one another by the lifting/pivoting apparatus (19) about the second transverse axle (13) in a first raising phase such that the hay-making units (5) are brought approximately parallel to the ground and/or into an intermediate position further remote from the ground with respect to the working position and are pivoted relative to the vehicle frame (2) together about the first transverse axle (12) into the headland position and/or transport position in a second raising phase.

3. A hay-making machine in accordance with the preceding claim, wherein, in the named first raising phase, the intermediate frame (11) is pivoted upwards about the first transverse axle (12), wherein the support frame (7) pivots relative to the intermediate frame (11) in the opposite direction about the second transverse axle (13).

4. A hay-making machine in accordance with one of the preceding claims, wherein the lifting/pivoting apparatus (19) comprises an adjustment actuator (20) provided between the vehicle frame (2) and the intermediate frame (11) for pivoting the intermediate frame (11) about the first transverse axle (12) relative to the vehicle frame (2) and the support frame (7) has a free travel with respect to the second transverse axle (13) relative to the intermediate frame (11), which free travel is limited by a pivot limiter (15) such that, on an initial raising of the intermediate frame (11) from the lowered working position, the support frame (7) kinks relative to the intermediate frame (11) and/or pivots in an opposite direction and, on a further raising/pivoting of the intermediate frame (11), the pivot limiter (15) takes along the support frame (7) such that the intermediate frame (11) and the support frame (7) pivot together about the first transverse axle (12) relative to the vehicle frame (2).

5. A hay-making machine in accordance with the preceding claim, wherein the free travel of the support frame (7) is limited in both directions with respect to the second transverse axle (13) such that the adjustment actuator can be released in the working position and/or can be brought into the floating position and the intermediate frame (11) and the support frame (7) is held by a pivot limiter in a predefined position in working operation with a released raising/pivoting apparatus (19).

6. A hay-making machine in accordance with one of the preceding claims, wherein the lifting/raising apparatus (19) has an adjustment actuator (16) between the intermediate frame (11) and the support frame (7) for adjusting the kink position of the intermediate frame (11) and the support frame (7) with respect to the second transverse axle (13).

7. A hay-making machine in accordance with the preceding claim, wherein control means actuable from the tractor for adjusting the kink position between the support frame (7) and the intermediate frame (11) are associated with the adjustment actuator (16).

8. A hay-making machine in accordance with one of the two preceding claims, wherein detection means (18) are provided for detecting the engagement angle of the hay-making units to the ground and/or for detecting a ground spacing of a section of a hay-making unit and/or of the support frame (7) from the ground and a control and/or regulation apparatus is associated with the adjustment actuator (16) for setting the kink position between the support frame (7) and the intermediate frame (11) in dependence on the detected engagement angle and/or on the detected ground spacing.

9. A hay-making machine in accordance with one of the preceding claims, wherein the intermediate frame (11) is configured and/or arranged such that the intermediate frame (11) adopts an approximately horizontal alignment in its lowered working position and/or the first and the second horizontal transverse axles (12, 13) lie in a plane approximately parallel to the ground and/or the intermediate frame forms a rear extension of the vehicle frame (2) and/or the intermediate frame (11) projects to the rear beyond the chassis (4) viewed in the direction of travel.

10. A hay-making machine in accordance with one of the preceding claims, wherein a length of the intermediate frame (11) perpendicular to the transverse axles (12, 13) approximately amounts to a range of 20% to 150%, preferably 30% to 80%, of the longitudinal extent of the support frame (7) perpendicular to the transverse axle (13).

11. A hay-making machine in accordance with one of the preceding claims, wherein the support frame (7) comprises side parts which can be folded down and which are pivotally connected in a pivotable manner at a middle part (10) of the support frame (7) which is pivotally connected to the intermediate frame (11) pivotable about the second horizontal transverse axis (13), in particular such that the named side parts can be folded up in the lowered working position about horizontal axle hinges facing in the direction of travel and/or in the raised transport position to the front at the vehicle frame (2).

## Revendications

1. Faneuse, de préférence épandeur-faneur combiné, avec un cadre de châssis (2) montable sur un tracteur, qui est appuyé au sol par l'intermédiaire d'un mécanisme de roulement (4), ainsi qu'une pluralité de groupes de fanage (5), qui sont tournés sur paliers sur un cadre porteur (7), qui est levable par rapport au cadre de châssis (2) ensemble avec les groupes de fanage (5) par un dispositif élévateur/de pivotement (19) dans une position de retournement préliminaire et/ou de transport, le dispositif élévateur/de pivotement (19) étant configuré de sorte que tout d'abord la position relative des groupes de fanage (5) est modifiable par rapport au sol, et ensuite dans une autre étape les groupes de fanage (5) sont transférables dans la position de retournement préliminaire et/ou de transport, **caractérisée en ce que**, entre le cadre de châssis (2) et le cadre porteur (7), un cadre intermédiaire (11) est prévu, qui est articulé d'une part de manière oscillante autour d'un premier axe transversal couché (12) sur le cadre de châssis (2) et d'autre part est relié de manière oscillante autour d'un second axe transversal couché (13) avec le cadre porteur (7), le dispositif élévateur/de pivotement (19) étant configuré de sorte que le cadre porteur (7) et le cadre intermédiaire (11) sont d'une part oscillants l'un par rapport à l'autre, afin de modifier la position relative des groupes de fanage (5) par rapport au sol, et d'autre part sont oscillants solidairement par rapport au cadre porteur autour du premier axe transversal (12), afin d'être transférés dans la position de retournement préliminaire et/ou de transport.

2. Faneuse selon la revendication précédente, le cadre porteur (7) et le cadre intermédiaire (11) étant d'une part oscillés l'un par rapport à l'autre dans une première phase de levage par le dispositif élévateur/de pivotement (19) autour du second axe transversal (13), de sorte que les groupes de fanage (5) sont transférés environ parallèlement au sol et/ou dans une position intermédiaire éloignée davantage du sol par rapport à la position de travail, et dans une seconde phase de levage, articulés solidairement autour du premier axe transversal (12) par rapport au cadre de châssis (2) dans la position de retournement préliminaire et/ou de transport.

3. Faneuse selon la revendication précédente, le cadre intermédiaire (11) étant d'une part oscillé dans ladite première phase de levage vers le haut autour du premier axe transversal (12), le cadre porteur (7) étant oscillé dans la direction inverse autour du second axe transversal (13) par rapport au cadre intermédiaire (11).

4. Faneuse selon une quelconque des revendications précédentes, le dispositif élévateur/de pivotement (19) comportant un acteur de réglage (20) prévu entre le cadre de châssis (2) et le cadre intermédiaire (11) pour le pivotement du cadre intermédiaire (11) autour du premier axe transversal (12) par rapport au cadre de châssis (2) et le cadre porteur (7) possédant une suspension libre par rapport au cadre intermédiaire (11) concernant le deuxième axe transversal (13), qui est limitée par un limiteur de pivotement (15), de sorte que, lors d'un levage initial du cadre intermédiaire (11) à partir de la position de travail abaissée, le cadre porteur (7) par rapport au cadre intermédiaire (11) se désaxe et/ou oscille en sens opposé, et lors d'un autre levage/pivotement du cadre intermédiaire (11), le limiteur de pivotement (15) entraîne le cadre porteur (7) de sorte que le cadre intermédiaire (11) et le cadre porteur (7) oscillent solidairement autour du premier axe transversal (12) par rapport au cadre de châssis (2).

5. Faneuse selon la revendication précédente, la suspension libre du cadre porteur (7) étant limitée par rapport au deuxième axe transversal (13) dans les deux directions de sorte que l'acteur de réglage peut être détendu dans la position de travail et/ou amené en position flottante et que le cadre intermédiaire (11) est maintenu par un limiteur de pivotement dans une position prédéterminée par rapport au cadre porteur (7) en mode de travail en cas de dispositif élévateur/de pivotement (19) détendu.

6. Faneuse selon une quelconque des revendications précédentes, le dispositif élévateur/de pivotement (19) présentant un acteur de réglage (16) entre le cadre intermédiaire (11) et le cadre porteur (7) pour le réglage de la position de désaxage du cadre intermédiaire (11) et du cadre porteur (7) par rapport au deuxième axe transversal (13).

7. Faneuse selon la revendication précédente, des moyens de commande actionnable à partir du tracteur étant affectés à l'acteur de réglage (16) pour le réglage de la position de désaxage entre le cadre porteur (7) et le cadre intermédiaire (11).

8. Faneuse selon une quelconque des deux revendications précédentes, des moyens de saisie (18) étant prévus pour la saisie de l'angle d'inclinaison des groupes de fanage par rapport au sol et/ou pour la saisie d'une garde au sol d'une section d'un groupe de fanage et/ou du cadre porteur (7) au sol et un dispositif de commande et/ou de régulation étant affecté à l'acteur de réglage (16) pour le réglage de la position de désaxage entre le cadre porteur (7) et le cadre intermédiaire (11) en fonction de l'angle d'inclinaison saisi et/ou de la garde au sol saisie.

9. Faneuse selon une quelconque des deux revendications précédentes, le cadre intermédiaire (11) étant configuré et/ou disposé de sorte que le cadre intermédiaire (11) adopte un alignement environ couché dans sa position de travail abaissée et/ou le premier et le second axe transversal couchés (12, 13) soient allongés sur un plan approximativement parallèle au sol et/ou le cadre intermédiaire constitue une prolongation arrière du cadre de châssis (2) et/ou le cadre intermédiaire (11) vu dans le sens de la marche fait saillie vers l'arrière au-dessus du mécanisme de roulement (4).

10. Faneuse selon une quelconque des deux revendications précédentes, une longueur du cadre intermédiaire (11) verticalement par rapport aux axes transversaux (12, 13) étant environ dans la zone de 20 % à 150 %, de préférence de 30 % à 80 %, de la projection longitudinale du cadre porteur (7) verticalement par rapport à l'axe transversal (13).

11. Faneuse selon une quelconque des deux revendications précédentes, le cadre porteur (7) comportant des parties latérales, qui sont articulées de manière oscillante sur une partie centrale (10) du cadre porteur (7), qui est articulé de manière oscillante sur le cadre intermédiaire (11)autour du second axe transversal couché (13), notamment de sorte que lesdites parties latérales sont dépliantes dans la position de travail abaissée autour de charnières d'axe couchées orientées dans le sens de la marche et/ou dans la position de transport levée vers l'avant sur le cadre de châssis (2).
